# EUROPEAN PATENT APPLICATION

(11) **EP 2 768 214 A2**
(43) Date of publication of application: **20.08.2014**
(21) Application number: 14151584.1
(22) Date of filing: 17.01.2014
(51) Int. Cl.: H04N 5/232

(54) **Method of tracking object using camera and camera system for object tracking**

(30) Priority: 14.02.2013 KR 20130015722
(71) Applicant: Samsung Electronics Co., Ltd, Gyeonggi-do 443-742 (KR)
(72) Inventor: Kang, Tae Hoon, Gyeonggi-do (KR); Kim, Jong Sun, Gyeonggi-do (KR)
(74) Representative: Brandon, Paul Laurence

(57) **Abstract**

Disclosed herein is a method of object tracking using a camera system. A preview image is displayed on a display unit of the camera system. A plurality of objects of interest is selected from the preview image. The plurality of objects of interest is tracked to determine respective priorities. Autofocus is performed based on a highest priority object of the plurality of objects of interest.

## Description

### BACKGROUND

### 1. Field

Embodiments of the present disclosure relate to a method of tracking an object using a digital camera and a camera system for object tracking to efficiently perform auto focus (AF) when a plurality of objects are tracked.

### 2. Related Art

With the spread of digital cameras, many people easily capture a variety of images. Such a digital camera has an automatic mode function so as to allow a beginner to easily take a picture and to allow a normal user to acquire a high quality image more conveniently. In order to acquire a high quality image, it is necessary to know an illumination state and a position of an object in a preview screen and to accurately adjust automatic focusing (AF).

In order to accurately adjust AF, it is necessary to know a position of an object and to use an object tracking algorithm to continually track the object. An example of a method of adjusting AF using the object tracking algorithm may include continuous auto focus (CAF).

CAF has a single tracking function of reading a pattern of one object of interest and continually tracking the pattern (at a predetermined rate). A digital camera tracks movement of an object of interest and adjusts AF using the single tracking function. In addition, the digital camera detects the movement of the object and resets and updates AF according to whether the object moves.

Thus, according to object tracking using a digital camera, the digital camera continually tracks an object in conjunction with CAF. However, when the digital camera tracks a plurality of objects using a single tracking function for tracking one object, there is no method to determine which object of the plurality of objects should be subjected to AF, and a user may experience inconvenience when tracking one object and then re-selecting another object to be tracked.

### SUMMARY

Therefore, it is an aspect of the present disclosure to provide a method of tracking an object using a camera and a camera system for object tracking, to determine an object to which priority is to be assigned to efficiently perform auto focus (AF) when a plurality of objects are tracked.

Additional aspects of the disclosure will be set forth in part in the description which follows and, in part, will be apparent from the description, or may be learned by practice of the disclosure.

In accordance with one aspect of the present disclosure, method of object tracking using a camera system is described. A preview image is displayed on a display unit of the camera system. A plurality of objects of interest are selected from the preview image. The plurality of objects of interest are tracked to determine respective priorities. Autofocus is performed based on a highest priority object of the plurality of objects of interest.

The method may further include registering at least one object. The selecting may include selecting the plurality of objects of interest from the at least one registered object.

The method may include determining the priority of an object of the plurality of objects of interest based on at least one of a movement of the object, a distance to the object, or a size of the object.

The method may further include detecting the movement of the object. The determining of the priority may include determining the priority based on whether the object moves.

The determining of the priority may include raising priority for a small movement of the object, and lowering priority for a large movement of the object.

The determining of the priority may include determining an object with least movement as a main object of the plurality of objects of interest.

The performing of the AF may include performing the AF based on the main object.

The method may further include selecting a photography distance at which photography is to be performed. The determining of the priority may include assigning the highest priority to an object within the selected photography distance.

The method may further include detecting the size of the object. The determining of the priority may include assigning the highest priority to an object with a large size.

The method may further include storing features of the plurality of objects of interest. Tracking may be attempted based on the stored features when an object moves outside a display range of the display unit of the camera system.

In accordance with another aspect of the present disclosure, a camera system includes a display unit to display a preview image. The camera system includes an input unit to select a plurality of objects of interest from the preview image. The camera system further includes an object tracker to track the plurality of objects of interest. The camera system includes an object determination unit to determine respective priorities of the plurality of objects of interest. The camera system further includes a focus adjuster to perform auto focus (AF) based on a highest priority object of the plurality of objects of interest.

The camera system may further include an object registration unit to register at least one object. The input unit may select the plurality of objects of interest from the at least one registered object.

The object tracker may perform object tracking based on the highest priority object when tracking the plurality of objects of interest.

The camera system may further include a storage unit to store features of an object for tracking of the plurality of objects of interest. The object tracker attempts tracking based on the stored features when an object moves outside a display range of the display unit of the camera system.

The object determination unit may determine the priority of an object of the plurality of objects of interest based on at least one of a movement of the object, a distance to the object, and a size of the object.

The camera system may further include a movement detector to detect movement of the object. The object determination unit may raise priority for a small movement of the object and lower priority for a large movement of the object.

The object determination unit may assign the highest priority to an object within a photography distance at which photography is to be performed.

The object determination unit may assign the highest priority to an object with a large size. According to a method of object tracking using a camera system and a camera system for object tracking, when a plurality of objects are tracked, photography may be guided based on an object that moves least such that a user acquires an improved image of an object of interest. In addition, instead of tracking one object, a plurality of objects of interest may be selected for registration as a candidate group so as to avoid inconvenience of reselecting an object many times and performing auto refocusing on the selected object.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a block diagram illustrating a structure of a camera system according to an embodiment;
FIG. 2 is a diagram illustrating an image for selection of a plurality of objects, according to an embodiment;
FIG. 3 is a diagram illustrating a distance from an object, according to an embodiment;
FIG. 4 is a flowchart of a control method for tracking a plurality of objects in a camera system according to an embodiment;
FIG. 5 is a diagram illustrating an example of a screen for determining priority in a camera system according to an embodiment;
FIG. 6 is a diagram illustrating another example of a screen for determining priority of an object in a camera system according to an embodiment; and
FIG. 7 is a diagram illustrating another example of a screen for determining priority in a camera system according to an embodiment.

### DETAILED DESCRIPTION

Reference will now be made in detail to embodiments of the invention, examples of which are illustrated in the accompanying drawings.

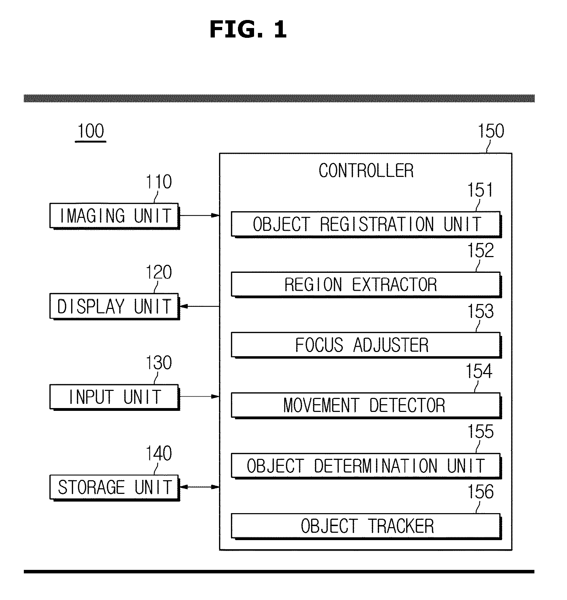

FIG. 1 is a block diagram illustrating a structure of a camera system 100 according to an embodiment.

In FIG. 1, the camera system 100 according to the present embodiment may be a digital camera, a mobile terminal including a camera (or a camera module), or the like.

The camera system 100 may include an imaging unit 110, a display unit 120, an input unit 130, a storage unit 140, and a controller 150.

The imaging unit 110 photographs an object to output image data (e.g., raw image data). The imaging unit 110 forms an optical image of the object and detects the formed optical image as digital image data, that is, raw image data. The imaging unit 110 may include a lens system that includes at least one lens to form the optical image of the object. The imaging unit may further include an image sensor such as a charge-coupled device (CCD) image sensor or a complementary metal-oxide semiconductor (CMOS) image sensor to detect the formed optical image as the digital image data.

In addition, the imaging unit 110 includes an image signal processor (ISP). The imaging unit 110 generates and outputs preview image data based on the raw image data and one or more preset preview setting parameters (e.g., resolution, noise filtering, edge improvement, etc.). The raw image data in one example refers to image data that has not been postprocessed (e.g., filtered, or the like) while having full resolution supported by an image sensor. The preview image data in one example refers to postprocessed image data having lower resolution than the raw image data. In addition, each of the raw image data and the preview image data may include consecutive image frames.

The display unit 120 displays a preview image, based on the preview image data output from the imaging unit 110, to a user. As the display unit 120, a liquid crystal display (LCD), an organic light emitting diode (OLED) display, an active matrix organic light emitting diode (AMOLED) display, etc. may be used.

The display unit 120 in one example visually provides a menu of a digital camera, input data, function setting information, and various other information to the user.

The display unit 120 in another example performs a function of outputting a booting image, a standby image, menu image, and other preview images of the digital camera.

In addition, the display unit 120 may display tracking of a plurality of objects selected by the input unit 130, for example, via tracking boxes.

The input unit 130 selects one or more points of an object of interest, or a predetermined region to which the object of interest belongs, to select the plurality of objects. This selection may be performed via manipulation by the user of input keys, buttons, a touchscreen, etc. of the input unit 130.

In one example using input key manipulation, the object is selected by positioning an arrow, a window, a point, or the like on the object using direction buttons of the input unit 130 and then pushing a selection button of the input unit 130. In another example, when the arrow is positioned at a first point using the direction buttons and the selection button is pushed at a first time, and then, the arrow is positioned on a second point and the selection button is pushed at a second time, a rectangular window is set based on the first and second points that are determined at the first and second times such that an entire or partial portion of an object of interest is contained in the rectangular window.

When the object is selected using the touchscreen, a region of a preview screen (e.g., the display unit 120) where the object is positioned is pushed with a finger, a stylus, etc. In this case, when the finger or the stylus moves while contacting the region on the preview screen, a rectangular window is set having opposite corners at start and end points of the movement and an entire or partial portion of the object of interest is contained in the rectangular window.

According to the present embodiment, the object is selected using the rectangular window. However, any window having a closed shape may be used. For example, when the selection button is pushed, a predetermined window shape may be set based on a shape of the object to be selected.

In addition, the input unit 130 may receive user input for focus area setting or a photography start during photography.

The storage unit 140 may store images for application for tracking of a plurality of objects and a graphical user interface (GUI) related to the application, databases related to user information, documents, background images (a menu image, a standby image, etc.), operating programs, or other elements for operation of the camera system 100.

The storage unit 140 in one example is a memory (e.g., a dynamic random access memory) to receive and store image data output from the imaging unit 110 and data for tracking of the plurality of objects. For example, when an object moves outside a display range of a preview screen, features of the object that has been tracked are stored in the storage unit 140, and then, when the object enters the preview screen again, the features of the object, stored in the storage unit 140, are extracted and tracked again.

In addition, the storage unit 140 may store programs and data for operation of the camera system 100 and may be divided into a program region and a data region. The program region may store a program for control of overall operations of the camera system 100, an operating system (OS) for an operation of the camera system 100, an application program for display of multimedia content, or other optional functions of a portable terminal (e.g., the camera system 100), for example, a camera function, a sound playback function, or an image or video display function. The data region may store data generated based on use of the camera system 100 and store an image, a video, a phone book, etc.

The controller 150 controls overall operations of components of the camera system 100. In particular, the controller 150 may control a series of AF processes based on movement of the object in a focus area. For example, the controller 150 may further include an object registration unit 151, a region extractor 152, a focus adjuster 153, a movement detector 154, an object determination unit 155, and an object tracker 156.

The object registration unit 151 allows the user to preregister a plurality of objects of interest. Here, an object is photographed and one or more objects within the photograph may be registered. For example, an object, to be subsequently photographed by the user, within a picture stored in the digital camera is registered using various camera interfaces, for example, the buttons, keys, or touchscreen of the input unit 130.

According to an embodiment, the controller 150 includes the object registration unit 151. Alternatively, an external device, for example, an external server, a personal computer (PC), or the like may register an object of interest, and then, the registered object may be downloaded to and tracked by the controller 150. In this case, the object registration unit 151 may be omitted from the controller 150.

The region extractor 152 extracts a region of the object based on a point or region selected by the input unit 130. Here, the object region may include a main portion of the object of interest, an entire portion of the object of interest, or a region containing the object of interest.

In addition, when the region extractor 152 receives image data output from the imaging unit 110, the region extractor 152 divides a preview image displayed on the display unit 120 into areas with a preset size. The divided areas are for calculation of movement of the object. In this regard, the preview image is divided into m pieces in a horizontal direction and n pieces in a vertical direction to have 'm x n' areas. The number of the divided areas may vary according to specification of the digital camera (e.g., a resolution of the display unit 120). As the number of the divided areas increases, the size of one area may be reduced and an auto refocusing operation may proceed in spite of slight movement of the object.

For example, it may be seen that the preview image is divided into m areas from ã to am-1 in a horizontal direction and is divided into n areas from b to bn-1 in a vertical direction. Hereinafter, according to an embodiment, each of the 'm x n' areas will each be referred to as a tracking area. In addition, an area of the object, which is subjected to AF, will be referred to as a focus area, and a tracking area containing the focus area will be referred to as an active tracking area.

The tracking area is an area obtained by dividing the preview image by the region extractor 152 and may be displayed or not be displayed on the preview screen based on user selection.

The focus adjuster 153 performs a focus operation in order to capture a sharp (e.g., in-focus) image based on a distance between the imaging unit 110 and the object. In this case, a focus region for AF may be graphically displayed as a circle, a rectangle, a grid, etc. According to an embodiment, when the focus adjuster 153 receives input for selection of the focus area from the user, the focus adjuster 153 selects a corresponding area as the focus area. On the other hand, when the focus adjuster 153 does not receive input for selection of the focus area from the user, the focus adjuster 153 selects a default area of the camera system 100 as the focus area.

In addition, when the focus adjuster 153 performs AF and then receives a movement detection signal of the object from the movement detector 154, the focus adjuster 153 performs auto refocusing based on the focus area. In one example, auto refocusing is performed once. When the auto refocusing is performed a plurality of times, electrical current may be unnecessarily consumed from a battery of the camera system 100.

According to an embodiment, the focus adjuster 153 determines whether to perform a focusing operation based on movement information of the object during auto focus (AF) or continuous auto focus (CAF) in order to track a plurality of objects.

The movement detector 154 detects whether the object moves after an AF operation of the focus adjuster 153 is completed. In this case, the movement detector 154 may store a reference image for determining whether the object moves and detect that the object moves when a data value of the reference image is different from that of a current image. When the object moves, the movement detector 154 generates the movement detection signal and outputs the signal to the focus adjuster 153. Then, the focus adjuster 153 receives the movement detection signal and performs the auto refocusing based on the focus area.

The movement detector 154 receives preview image data output from the imaging unit 110 to detect whether the object moves.

In addition, the movement detector 154 compares a current image frame and a previous image frame and detects whether the object moves based on a difference between the current image frame and the previous image frame, that is, a difference between two consecutive image frames.

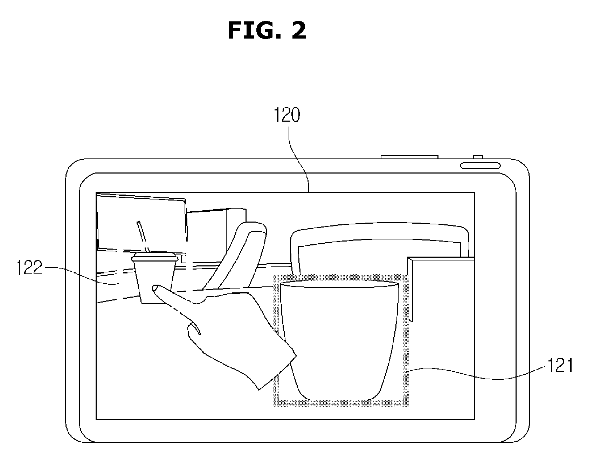

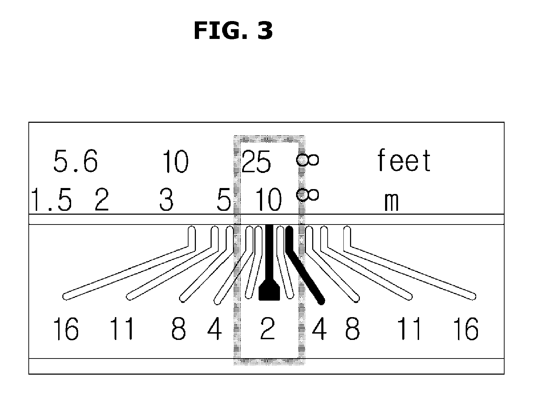

When the user selects a plurality of objects, the object determination unit 155 determines priorities to be assigned to the plurality of objects and determines a main object of the plurality of objects (e.g., with a highest priority) based on at least one of movement of the object, a distance from the object, or the size of the object. A detailed method of determining priority of the object will be described below with reference to FIGS. 2 and 3.

The object determination unit 155 detects the object registered by the object registration unit 151 from image data output from the imaging unit 110. The object determination unit 155 determines whether the object registered by the object registration unit 151 is present in a scene to be currently photographed, for example, an image displayed by the preview screen of the camera system 100. With regard to a determination method, the object determination unit 155 extracts features from an input image and features from an object image and determines whether the features are similar. The features may be extracted via scale invariant feature transform (SIFT) feature extraction, edge feature extraction, color feature extraction, or the like. The SIFT is an algorithm to extract a feature that is robust with respect to change in size and rotation of an image. According to the edge feature extraction, edge images are extracted from images and features are extracted using average values of the extracted edge images. With regard to the color feature extraction, a color feature is noticeable among visual features of an image and may be extracted using a color histogram. In this regard, based on the color feature extraction, intensity values of color images are calculated using a histogram to extract color features, and then, images are compared to determine similarity therebetween.

The object tracker 156 recognizes movement of the object, determined by the object determination unit 155, and continually tracks the object using an object tracking algorithm. Here, the object is tracked using an object tracking algorithm such as a known particle filter, mean shift, or Lucas, Kanade & Tomasi (LKT) feature tracking.

In addition, when the object tracker 156 tracks a plurality of objects, the object tracker 156 performs object tracking on the plurality of objects based on the main object determined by the object determination unit 155.

Hereinafter, a method of determining an object to which a highest priority is to be assigned from the plurality of objects, that are selected by a user, by the object determination unit 155 will be described with reference to FIGS. 2 and 3.

FIG. 2 is a diagram illustrating an image for selection of a plurality of objects, according to an embodiment. FIG. 3 is a diagram illustrating a distance to an object from the camera system 100, according to an embodiment.

One example of a method of determining priority based on a degree by which an object moves right, left, up, or down by the object determination unit 155 is described herein.

Two or more objects, for example, objects of interest 121 and 122 as shown in FIG. 2, are selected by the user via the input unit 130 on a preview screen (e.g., the display unit 120 of the camera system 100).

FIG. 2 illustrates a case in which a touchscreen is used for selection. Alternatively, instead of a touchscreen, a shutter button of the input unit 130 may be pressed halfway or other selection buttons of the input unit 130 may be pressed to select the objects 121 and 122.

An object tracking algorithm is performed by the object tracker 156 on the selected objects 121 and 122. When the objects 121 and 122 are present in the display unit 120, the objects 121 and 122 are continually tracked. Even if the objects 121 and 122 move outside a display range of the display unit 120, tracking may be attempted based on features of the objects 121 and 122, which are stored in the storage unit 140.

Then, tracking is performed by the object tracker 156 based on the selected objects 121 and 122, and simultaneously, the movement detector 154 detects movement of the objects 121 and 122.

In one example, the object determination unit 155 assigns a lowest priority to an object, of the objects 121 or 122, which moves outside the display range of the display unit 120. In addition, an object of the objects 121 or 122 which moves more quickly is displayed first on the display unit 120. For example, as a method of displaying an object on the display unit 120, a tracking box with a selected color (e.g., tracking boxes 221 and 222) is shown to the user and the camera system 100 performs AF on an object of the objects 121 or 122 that does not move. Alternatively, AF may be performed by pressing a shutter button halfway.

When the objects 121 and 122 move up, down, right, or left on a focal plane relative to a previous image frame, the size of each of the objects 121 and 122 of a current image frame is the same as in the previous image frame. Thus, when object the determination unit 155 determines priority based on a degree by which the objects 121 and 122 move up, down, right, or left and photography is performed, the photography is guided based on the object 121 or 122 that moves least. Thus, during the photography of the user, an improved image of the objects of interest 121 and 122 may be acquired. In addition, instead of tracking one object, the plurality of objects of interest 121 and 122 are selected as a candidate group so as to avoid inconvenience of reselecting the objects 121 and 122 many times and performing auto refocusing on the selected objects 121 and 122.

One example of a method of determining priority based on a distance from an object by the object determination unit 155 is described herein.

Two or more objects, for example, the objects of interest 121 and 122, are selected by the user via the input unit 130 on the display unit 120 of the camera system 100 (refer to FIG. 2).

Then, a photography distance at which photography is to be performed is selected. In this case, a focus step is shown to a user such that the user selects an object within a focus range.

The object tracker 156 performs an object tracking algorithm on the selected objects 121 and 122. When the objects 121 and 122 are present in the display unit 120, the objects 121 and 122 are continually tracked. Even if the objects 121 and 122 move outside the display range of the display unit 120, tracking may be attempted based on features of the objects 121 and 122, which are stored in the storage unit 140.

Then, when an object, of the objects 121 or 122, is within the focus range, a highest priority is assigned to that object.

In FIG. 3, central numbers 302 indicate distances to an object (e.g., the objects 121 or 122). FIG. 3 illustrates a case in which an object at a distance of 10 m is focused on. Distance information may vary according to a lens used by the camera system 100. In addition, as a distance increases, the distance may be more accurately measured.

Accordingly, when the object determination unit 155 determines priority based on a distance to the object 121 or 122 and photography is performed, an improved image of the objects of interest 121 and 122 may be acquired. In addition, instead of tracking one object, the plurality of objects of interest 121 and 122 may be selected as a candidate group so as to avoid inconvenience of reselecting the objects 121 and 122 many times and performing auto refocusing on the selected objects 121 and 122.

One example of a method of determining priority by the object determination unit 155 based on a change in an object that moves forward or backward is described herein.

Two or more objects, for example, the objects of interest 121 and 122, are selected by the user via the input unit 130 on the display unit 120 of the camera system 100 (refer to FIG. 2).

In this case, when the objects 121 and 122 are selected, distances to the objects 121 and 122 are determined while AF and object tracking are performed.

Then, when one or more of the object 121 or 122 moves forward or backward, the size of a corresponding tracking box is increased or reduced. When the size of the tracking box is changed, the object determination unit 155 lowers the priority of the moving object 121 or 122, and then, AF is performed on the object 121 or 122.

For example, when the object 121 or 122 moves forward or backward, a captured image of the object is likely blurry, and thus, the object determination unit 155 lowers the corresponding priority.

When the objects 121 and 122 move forward or backward in a focal plane relative to a previous image frame, the size of each of the objects 121 and 122 of a current image frame is different from in the previous image frame. Thus, when the object determination unit 155 determines priority based on a change in the sizes of the objects 121 and 122 and photography is performed, the photography is guided based on the object 121 or 121 that moves least. Thus, during the photography of the user, an improved image of the objects of interest 121 and 122 may be acquired. In addition, instead of tracking one object, the plurality of objects of interest 121 and 122 may be selected as a candidate group so as to avoid inconvenience of reselecting the objects 121 and 122 many times and performing auto refocusing on the selected objects 121 and 122.

Hereinafter, operation of a method of tracking an object using a camera system according to an embodiment will be described.

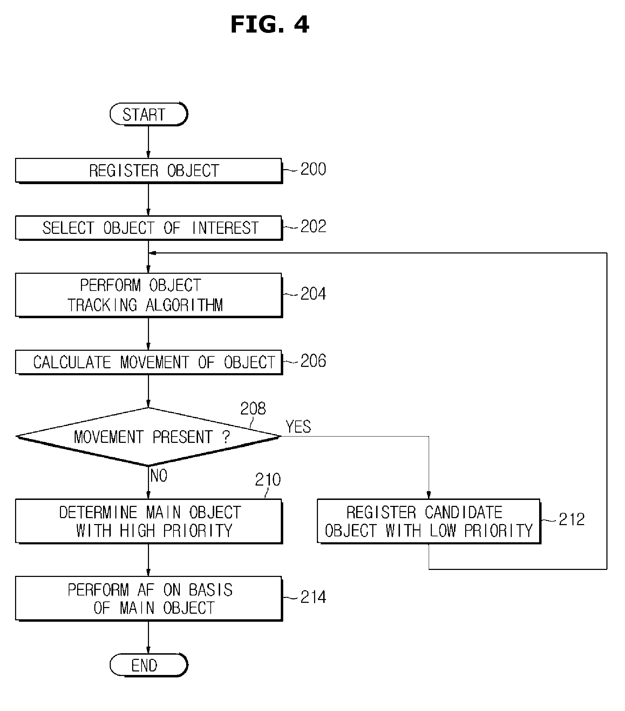

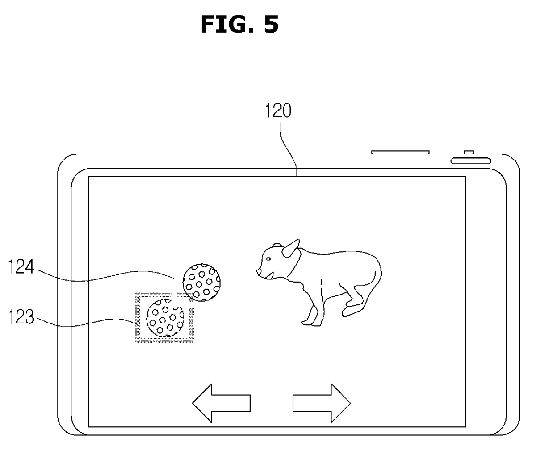

FIG. 4 is a flowchart of one example of a control method for tracking a plurality of objects in the camera system 100 according to an embodiment. FIG. 5 is a diagram illustrating an example of a screen for determining priority in the camera system 100 according to an embodiment.

In FIG. 4, the camera system 100 according to the present embodiment registers a plurality of objects of interest (e.g., objects 123 and 124 of FIG. 5) via the object registration unit 151 prior to tracking of the plurality of objects (200). Here, the objects 123 and 124 are subjects for a photograph. One or more objects, for example, the objects 123 and 124 may be registered.

The imaging unit 110 photographs the objects 123 and 124 to output image data. The display unit 120 displays preview image data output from the imaging unit 110 to a user through a screen.

The user selects one or more points in the objects of interest 123 and 124 on the display unit 120 or selects a predetermined region containing the objects of interest 123 and 124 to select the plurality of objects 123 and 124 (for example, two balls of FIG. 5) (202). This selection may be performed via manipulation of the buttons, keys, or touchscreen of the input unit 130.

When the plurality of objects of interest 123 and 124 are selected, the object tracker 156 performs an object tracking algorithm (204) and the movement detector 154 performs pixel calculation in order to detect whether the objects 123 and 124 move (206).

That is, the movement detector 154 compares a current image frame and a previous image frame and detects whether the objects 123 and 124 move based on a difference between the current image frame and the previous image frame (e.g., a difference between two consecutive image frames).

For example, when the difference between the current image frame and the previous image frame is calculated to a relatively small value, this means that movement of the objects 123 and 124 is low. When the difference therebetween is larger, this means that movement of the objects 123 and 124 is higher.

In addition, the movement detector 154 determines how an object of the previous image frame has moved in the current image frame (e.g., right, left, up, or down). A degree of such movement is represented by a motion vector. Methods of determining movement are known, and thus, a detailed description thereof will be omitted.

Whether the objects 123 and 124 move is determined by the movement detector 154 (208), and when one of the objects 123 and 124 does not move, the object determination unit 155 selects that object as a main object with high priority (210).

As a result of determination of operation 208, when the objects 123 and 124 move, the object determination unit 155 registers the object 123 or 124 as a candidate object 123 or 124 with low priority (e.g., part of a candidate group), and the method returns to operation 204 to perform further operations.

A tracking box 524 in which the object 124 moves may be indicated with a red tracking box color and a tracking box 523 in which the object 123 does not move is indicated by a green tracking box color such that the user may more easily notice an object with high priority (e.g., the object 123 that is not moving).

When the object 123 is determined to be the main object, the focus adjuster 153 performs AF based on the object 123 (in detail, a ball in a green box) that does not move.

That is, the green tracking box 523 contains a ball that does not move, and thus, AF is performed based on the ball in the green tracking box, and a moving ball in a red tracking box 524 is registered as a candidate region of the object of interest 124.

Thus, when photography is performed, a sharp (e.g., in focus) image may be acquired based on the object 123 that moves least.

In addition, although a lower priority is assigned to the object 124 that moves, when a user wants to change between objects of interest 123 and 124 as the main object, the objects of interest 123 and 124 may be changed using an arrow indicated on a touchscreen or keys of the input unit 130. In this case, AF and photography are performed on the basis of the changed objects 123 and 124.

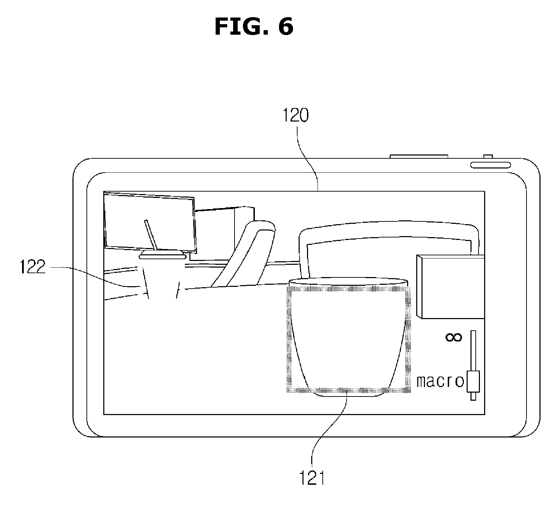

Hereinafter, a method of determining priority based on a distance from an object will be described with reference to FIG. 6.

FIG. 6 is a diagram illustrating another example of a screen for determining priority of an object in the camera system 100 according to an embodiment.

In FIG. 6, the camera system 100 according to the present embodiment registers the plurality of the objects of interest 121 and 122 via the object registration unit 151 prior to tracking of the plurality of objects.

The imaging unit 110 photographs the objects 121 and 122 to output image data. The display unit 120 displays preview image data output from the imaging unit 110 to a user through the display unit 120.

Thus, the user selects one or more points in the objects of interest 121 and 122 on the display unit 120 or selects a predetermined region containing the objects of interest 121 and 122 to select the plurality of objects 121 and 122 (for example, a cup and a drink, respectively). This selection may be performed via manipulation of the buttons, keys, or touchscreen of the input unit 130.

When the objects 121 and 122 are selected, AF is performed once and AF information (e.g., distance information) is stored in the storage unit 140 and is used to determine a distance to the objects 121 and 122.

Then, a photography distance at which photography is to be performed is selected. In this case, a macro range (e.g., a focus range) is shown to a user such that the user selects an object within the focus range.

When the object 121 is located in the selected macro range, the object determination unit 155 assigns a high priority to the object 121.

Distances to the objects 121 and 122, which are stored in the storage unit 140, are compared, priority is assigned to the object 121 located in the macro range, and then, AF is performed based on the object 121 in the macro range.

Thus, when photography is performed, a sharp (e.g., in-focus) result image based on the object 121 in the macro range may be acquired.

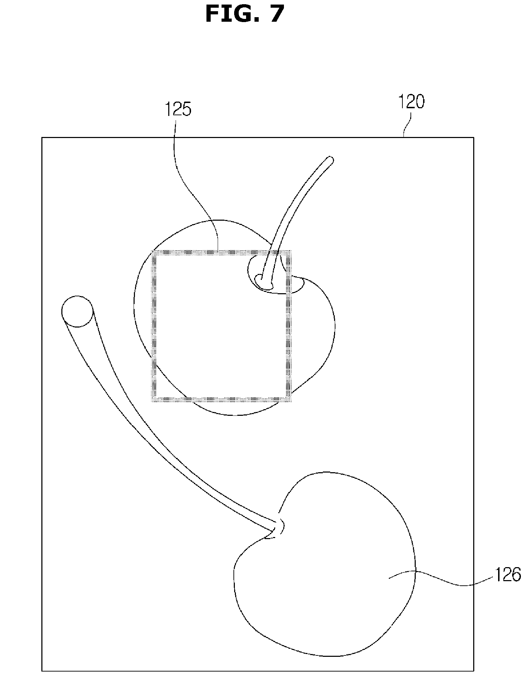

Hereinafter, a method of determining priority based on change in size of an object at the same focus distance will be described with reference to FIG. 7.

FIG. 7 is a diagram illustrating another example of a screen for determining priority in the camera system 100 according to an embodiment.

In FIG. 7, the camera system 100 according to the present embodiment registers a plurality of objects of interest 125 and 126 via the object registration unit 151 prior to tracking of a plurality of objects.

The imaging unit 110 photographs the objects 125 and 126 to output image data. The display unit 120 displays preview image data output from the imaging unit 110 to a user.

Thus, the user selects one or more points in the objects of interest 125, 126 on the display unit 120 or selects a predetermined region containing the objects of interest 125 and 126 to select the plurality of objects 125 and 126 (for example, two fruits). This selection may be performed via manipulation of the buttons, keys, or touchscreen of the input unit 130.

As illustrated in FIG. 7, a fruit (e.g., object 125) in a green tracking box 725 is larger than a fruit (e.g., object 126) in a red tracking box 726.

Thus, the object determination unit 155 assigns a higher priority to the object 125 with a larger tracking box.

When a higher priority is assigned to an object with a large box (e.g., object 125) at a same focus distance and the object 125 of the green box quickly moves forward or backward, the size of the tracking box for the object 125 rapidly changes. When the size of the tracking box for the object 125 has changed to a predetermined threshold value, priority of the object 125 may be set lower than that of the object 126 that does not move.

In this case, the object determination unit 155 assigns a lower priority to a larger box (e.g., object 125) because that box rapidly changes in size and thus AF and photography are performed on the object that does not move (e.g., object 126).

Although a few embodiments of the invention have been shown and described, it would be appreciated by those skilled in the art that changes may be made in these embodiments without departing from the principles and spirit of the invention, the scope of which is defined in the claims and their equivalents.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the embodiments illustrated in the drawings, and specific language has been used to describe these embodiments. However, no limitation of the scope of the invention is intended by this specific language, and the invention should be construed to encompass all embodiments that would normally occur to one of ordinary skill in the art. The terminology used herein is for the purpose of describing the particular embodiments and is not intended to be limiting of exemplary embodiments of the invention. In the description of the embodiments, certain detailed explanations of related art are omitted when it is deemed that they may unnecessarily obscure the essence of the invention.

The apparatus described herein may comprise a processor, a memory for storing program data to be executed by the processor, a permanent storage such as a disk drive, a communications port for handling communications with external devices, and user interface devices, including a display, touch panel, keys, buttons, etc. When software modules are involved, these software modules may be stored as program instructions or computer readable code executable by the processor on a non-transitory computer-readable media such as magnetic storage media (e.g., magnetic tapes, hard disks, floppy disks), optical recording media (e.g., CD-ROMs, Digital Versatile Discs (DVDs), etc.), and solid state memory (e.g., random-access memory (RAM), read-only memory (ROM), static random-access memory (SRAM), electrically erasable programmable read-only memory (EEPROM), flash memory, thumb drives, etc.). The computer readable recording media may also be distributed over network coupled computer systems so that the computer readable code is stored and executed in a distributed fashion. This computer readable recording media may be read by the computer, stored in the memory, and executed by the processor.

Also, using the disclosure herein, programmers of ordinary skill in the art to which the invention pertains may easily implement functional programs, codes, and code segments for making and using the invention.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements, the invention may be implemented with any programming or scripting language such as C, C++, JAVA®, assembler, or the like, with the various algorithms being implemented with any combination of data structures, objects, processes, routines or other programming elements. Functional aspects may be implemented in algorithms that execute on one or more processors. Furthermore, the invention may employ any number of conventional techniques for electronics configuration, signal processing and/or control, data processing and the like. Finally, the steps of all methods described herein may be performed in any suitable order unless otherwise indicated herein or otherwise clearly contradicted by context.

For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. The words "mechanism", "element", "unit", "structure", "means", and "construction" are used broadly and are not limited to mechanical or physical embodiments, but may include software routines in conjunction with processors, etc.

The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention as defined by the following claims. Therefore, the scope of the invention is defined not by the detailed description of the invention but by the following claims, and all differences within the scope will be construed as being included in the invention.

No item or component is essential to the practice of the invention unless the element is specifically described as "essential" or "critical". It will also be recognized that the terms "comprises," "comprising," "includes," "including," "has," and "having," as used herein, are specifically intended to be read as open-ended terms of art. The use of the terms "a" and "an" and "the" and similar referents in the context of describing the invention (especially in the context of the following claims) are to be construed to cover both the singular and the plural, unless the context clearly indicates otherwise. In addition, it should be understood that although the terms "first," "second," etc. may be used herein to describe various elements, these elements should not be limited by these terms, which are only used to distinguish one element from another. Furthermore, recitation of ranges of values herein are merely intended to serve as a shorthand method of referring individually to each separate value falling within the range, unless otherwise indicated herein, and each separate value is incorporated into the specification as if it were individually recited herein.

## Claims

1. A method of object tracking using a camera system (100), the method comprising:
displaying a preview image on a display unit (120) of the camera system (100);
selecting (202) a plurality of objects of interest from the preview image;
tracking (204) the plurality of objects of interest to determine respective priorities; and
performing (214) auto focus (AF) based on a highest priority object of the plurality of objects of interest.

2. The method according to claim 1, further comprising registering (200) at least one object,
wherein the selecting comprises selecting the plurality of objects of interest from the at least one registered object.

3. The method according to claim 1, further comprising determining (210) the priority of an object of the plurality of objects of interest based on at least one of a movement of the object, a distance to the object, or a size of the object.

4. The method according to claim 3, further comprising detecting (206) the movement of the object,
wherein the determining of the priority comprises determining (208) the priority based on whether the object moves.

5. The method according to claim 4, wherein the determining of the priority comprises raising priority for a small movement of the object, and lowering priority for a large movement of the object.

6. The method according to claim 5, wherein the determining of the priority comprises determining (210) an object with least movement as a main object of the plurality of objects of interest.

7. The method according to claim 6, wherein the performing of the AF comprises performing the AF based on the main object.

8. The method according to claim 3, further comprising selecting a photography distance at which photography is to be performed,
wherein the determining of the priority comprises assigning the highest priority to an object within the selected photography distance.

9. The method according to claim 3, further comprising detecting the size of the object, wherein the determining of the priority comprises assigning the highest priority to an object with a large size.

10. The method according to claim 1, further comprising:
storing features of the plurality of objects of interest; and
attempting to track based on the stored features when an object moves outside a display range of the display unit (120) of the camera system (100).

11. A camera system (100) comprising:
a display unit (120) to display a preview image;
an input unit (130) to select a plurality of objects of interest from the preview image;
an object tracker (156) to track the plurality of objects of interest;
an object determination unit (155) to determine respective priorities of the plurality of objects of interest; and
a focus adjuster (153) to perform auto focus (AF) based on a highest priority object of the plurality of objects of interest.

12. The camera system (100) according to claim 11, further comprising an object registration unit (151) to register at least one object,
wherein the input unit (130) selects the plurality of objects of interest from the at least one registered object.

13. The camera system (100) according to claim 11, wherein the object tracker (156) performs object tracking based on the highest priority object when tracking the plurality of objects of interest.

14. The camera system (100) according to claim 11, further comprising a storage unit (140) to store features of an object for tracking of the plurality of objects of interest,
wherein the object tracker (156) attempts tracking based on the stored features when an object moves outside a display range of the display unit (120) of the camera system (100).

15. The camera system (100) according to claim 11, further comprising a movement detector (154) to detect movement of the object,
wherein the object determination unit (155) raises priority for a small movement of the object, and lowers priority for a large movement of the object.
